# EUROPEAN PATENT SPECIFICATION

(11) **EP 3 391 499 B1**
(45) Date of publication and mention of the grant of the patent: **05.05.2021**
(21) Application number: 16825718.6
(22) Date of filing: 16.12.2016
(51) Int. Cl.: H02J 50/40, F25D 23/00, H02J 7/00, H02J 50/90, H02J 50/10, H01F 38/14

(54) **HOUSEHOLD APPLIANCE**
HAUSHALTSGERÄT
APPAREIL DE MAISON

(30) Priority: 16.12.2015 CN 201510946870
(43) Date of publication of application: 24.10.2018
(73) Proprietor: Tyco Electronics (Shanghai) Co. Ltd., Shanghai 200131 (CN)
(72) Inventor: WANG, Shaoyong, Shanghai (CN); SONG, Yuming, Shanghai (CN); DAI, Feng, Shanghai (CN); FAN, Mingjie, Shanghai (CN)
(74) Representative: Grünecker Patent- und Rechtsanwälte PartG mbB
(86) International application number: PCT/EP2016/081460
(87) International publication number: WO 2017/103130

(56) References cited:
- EP-A2- 2 224 572
- EP-A2- 2 374 197
- WO-A1-2011/143059
- WO-A1-2014/179869
- JP-A- 2010 065 921
- US-A1- 2013 312 450

## Description

### Field of the Invention

The present invention relates to a wireless power supply device and an electrical equipment with the wireless power supply device.

### Description of the Related Art

Recently, the wireless power technology has brought great convenience to power moving parts of an electrical equipment. The wireless power technology may completely avoid issues of safety, lifetime and maintenance of the electrical equipment due to physical wear. Further, it may greatly increase freedom of the construction design of the electrical equipment, and increases aesthetic feeling and functionality of the electrical equipment, especially consumptive electrical equipment such as household appliances.

In the prior art, a transmitting module and a receiving module of a wireless power supply device are in one-to-one correspondence, that is, one transmitting module corresponds to one receiving module. Currently, the wireless power supply technology is based on an electromagnetic coupling principle. Generally, the wireless power supply device based on the electromagnetic coupling principle comprises a transmitting coil and a receiving coil. One transmitting coil should be coupled with one receiving coil, when the transmitting coil and receiving coil come close to each other, they will be electromagnetically coupled to each other.

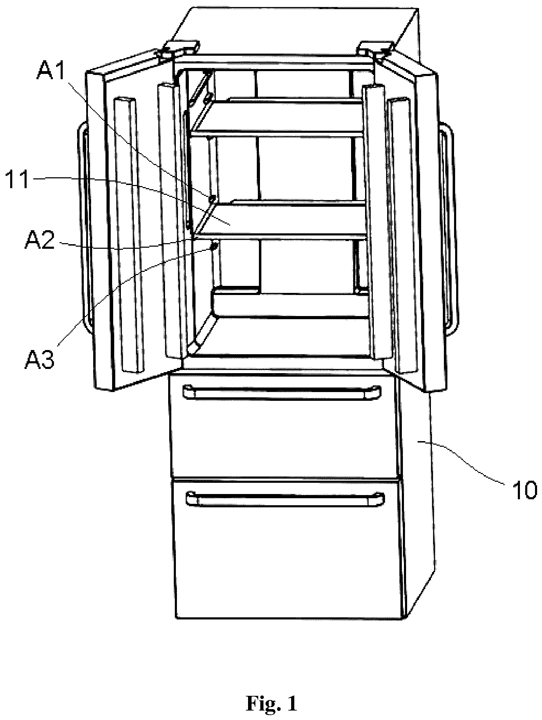

However, in practice, a load of an electrical equipment may be placed at different positions as necessary. For example, Fig. 1 illustrates a typical refrigerator. As shown in Fig. 1, in the refrigerator, a position of a shelf 11 is usually variable, and the user selectively places the shelves 11 at an appropriate position of different positions A1, A2 and A3 which are adjacent in a vertical direction. In order to wirelessly supply power to a load (e.g., a lighting lamp, a display lamp, etc.) mounted on the shelf 11, transmitting modules are normally placed at the positions A1, A2, A3, respectively. In this way, whatever position the shelf 11 is placed, the receiving module on the shelf may be electromagnetically coupled to a corresponding transmitter module, thereby powering the load on the shelf. However, all of the three transmit modules are in operation at any moment, resulting in an energy waste.

Patent application WO 2014/4179869 describes a system for transmission of at least power using inductive wireless coupling that includes an environmentally sealed dongle and a mounting component which releasably mates with the dongle. The dongle and the mounting component include first and second inductive coils respectively and corresponding ferrite cores. The coils are positioned within the dongle and mounting component so that they are aligned for their inductive coupling when the dongle and mounting component are mated.

Patent application EP2224572 describes an adjustable inductive power transmission platform that includes inductive power outlets embedded into adjustable modules having multiple configurations. The inductive power outlets are configured to couple with inductive power receivers to provide power to electrical loads wired thereto. The multiple configurations of the adjustable modules allow the position of the inductive power outlets to be adjusted to match the locations of inductive receivers to suit changing requirements.

Patent application EP2374197 describes a wireless power supply having a plunger for mechanically interconnecting a remote device with the power supply. The plunger may be extendable/retractable to interfit with the remote device. In a second aspect, a wireless power supply has a movable primary that allows for close alignment between the primary and the secondary when the remote device is disposed within a range of different positions with respect to the charging surface.

### SUMMARY OF THE INVENTION

The present invention has been made to overcome or alleviate at least one aspect of the above mentioned disadvantages.

It is an object of the present invention to provide wireless power supply devices and electrical appliances using the same that obviate or mitigate at least one of the disadvantages and shortcomings of the related prior art.

This object is solved by the present invention as claimed in the appended independent claim. Particular embodiments of the present invention are defined by the appended dependent claims.

According to a comparative example useful for understanding the present invention, there is provided a wireless power supply device, comprising: a plurality of transmitting coil assemblies mounted on a plurality of different positions of an electrical equipment, each of the transmitting coil assemblies having a transmitting coil and a first magnetic core; a plurality of control switches provided at the plurality of different positions and are constructed to control on/off of the transmitting coils of the plurality of transmitting coil assemblies, respectively; and a single receiving coil assembly mounted on a carrier of the electrical equipment and has a single receiving coil and a single second magnetic core. The transmitting coil mounted at one position of the plurality of different positions is disconnected by switching off the control switch provided at the one position before the carrier is mounted at one position; and the transmitting coil mounted at one position of the plurality of different positions is connected by switching on the control switch provided at the one position after the carrier is mounted at the one position, such that the single receiving coil is electromagnetically coupled with the transmitting coil at the one position.

According to a further comparative example useful for understanding the present invention, the wireless power supply device further comprises a first circuit board installed on the electrical equipment and the transmitting coils of the plurality of the transmitting coil assemblies are connected in parallel to the first circuit board.

According to another comparative example, the wireless power supply device further comprises a second circuit board installed on the electrical equipment and the single receiving coil is electrically connected to the second circuit board.

According to another comparative example, the control switch is a normal open press mechanical switch, and is connected in series between the corresponding transmitting coil and the first circuit board. After the carrier is mounted at one position of the plurality of different positions, the carrier presses the control switch provided at the one position, such that the control switch is switched to a closed state.

According to another comparative example, the control switch is a normal open magnetic actuated switch, and the control switch is connected in series between one corresponding transmitting coil and the first circuit board. After the carrier is installed at one position of the plurality of different positions, a magnet mounted on the carrier applies magnetic force to the control switch, such that the control switch is switched to a closed state.

According to another comparative example, the transmitting coil is a cylindrical coil, and the first magnetic core has a cylindrical shape and is provided inside the transmitting coil. The receiving coil is a cylindrical coil, and the second magnetic core has a hollow cylindrical shape and is provided outside the transmitting coil.

According to another comparative example, after the carrier is installed at one position of the plurality of different positions, the transmitting coil assembly is positioned in the internal space of the receiving coil.

According to another comparative example, the first magnetic core has a rectangular parallelepiped shape, and the transmitting coil is wound around the outer circumference of the first magnetic core. The second magnetic core has a U-shape frame shape and comprises two opposite ends, the receiving coil being wound on the two ends of the second magnetic core respectively.

According to another comparative example, after the carrier is installed at one position of the plurality of different positions, the transmitting coil assembly is located between the two ends of the second magnetic core.

According to another comparative example, the first magnetic core has a flat plate shape and the transmitting coil has a ring shape, the transmitting coil being provided on a surface of the first magnetic core; and the second magnetic core has a flat plate shape and the receiving coil has a ring shape, the receiving coil being provided on a surface of the second magnetic core which faces the transmitting coil.

According to another comparative example, after the carrier is installed at one position of the plurality of different positions, the transmitting coil assembly and the receiving coil assembly are in a state of being parallel to each other and facing each other.

According to another comparative example useful for understanding the present invention, there is provided an electrical equipment, comprising: a carrier mounted at a plurality of different positions on an electrical equipment; a load mounted on the carrier; and a wireless power supply device constructed to supply power to the load. The wireless power supply device comprises a plurality of transmitting coil assemblies mounted on the plurality of different positions of the electrical equipment, each of the transmitting coil assemblies having a transmitting coil and a first magnetic core; a plurality of control switches provided at the plurality of different positions and are constructed to control on/off of the transmitting coils of the plurality of transmitting coil assemblies, respectively; and a single receiving coil assembly mounted on the carrier and having a single receiving coil and a single second magnetic core. Before the transmitting coil mounted at one position of the plurality of different positions is disconnected by switching off the control switch provided at the one position before the carrier is mounted at the one position; and the transmitting coil mounted at one position of the plurality of different positions is connected by switching on the control switch provided at the one position after the carrier is mounted at the one position, such that the single receiving coil is electromagnetically coupled with the transmitting coil at the one position.

According to another comparative example useful for understanding the present invention, there is provided a wireless power supply device adapted to supply power to a load of an electrical equipment, comprising: a single transmitting coil assembly mounted on the electrical equipment and extending to pass through a plurality of different positions on the electrical equipment; and a single receiving coil assembly mounted on a carrier of the electrical equipment and having a single receiving coil and a single magnetic core. After the carrier is installed at any one position of the different positions, the single receiving coil and the single transmitting coil are electromagnetically coupled..

According to another comparative example, the wireless power supply device further comprises a first circuit board installed on the electrical equipment and the single transmitting coils is electrically connected to the first circuit board.

According to another comparative example, the wireless power supply device further comprises a second circuit board installed on the electrical equipment and the single receiving coil is electrically connected to the second circuit board.

According to another comparative example, the single transmitting coil has a rectangular parallelepiped frame shape; and the magnetic core of the single receiving coil assembly has a U-shape frame shape and has two opposite ends, the single receiving coil being wound on one of the two ends of the magnetic core.

According to another comparative example , after the carrier is installed at any one of the different positions, one end of the magnetic core and the single receiving coil wound on the end are positioned in an internal space of the single transmitting coil and the other end of the magnetic core is positioned outside of the single transmitting coil.

According to another comparative example useful for understanding the present invention, there is provided an electrical equipment, comprising: a carrier mounted at a plurality of different positions on the electrical equipment; a load mounted on the carrier; and a wireless power supply device constructed to supply power to the load. The wireless power supply device comprises: a single transmitting coil assembly mounted on the electrical equipment and extending to pass through different positions on the electrical equipment; and a single receiving coil assembly mounted on the carrier and having a single receiving coil and a single magnetic core. After the carrier is mounted at one position of the different positions, the single receiving coil and the single transmitting coil are electromagnetically coupled.

In variety of embodiments of the present invention mentioned above, at the time that the load is installed at a position, only the transmitting module at this position is in operation and the rest of the transmitting modules are out of operation, saving the energy.

The above and other features of the present invention will become more apparent by describing in detail exemplary embodiments thereof with reference to the accompanying drawings.

### BRIEF DESCRIPTION OF THE DRAWINGS

The above and other features of the present invention will become more apparent by describing in detail exemplary embodiments thereof with reference to the accompanying drawings, in which:
Fig.1 shows a schematic view of a typical refrigerator;
Fig.2 shows a schematic view of a wireless power supply device according to an embodiment of the present invention;
Fig.3 shows a perspective view of a transmitting coil assembly and a receiving coil assembly of the wireless power supply device in Fig. 2 according to an embodiment of the present invention;
Fig.4 shows a perspective view of a transmitting coil assembly and a receiving coil assembly of the wireless power supply device in Fig. 2 according to another embodiment of the present invention;
Fig.5 shows a perspective view of a transmitting coil assembly and a receiving coil assembly of the wireless power supply device in Fig. 2 according to a further another embodiment of the present invention; and
Fig.6 shows a schematic view of a wireless power supply device according to another embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present disclosure, there is provided a wireless power supply device, comprising: a plurality of transmitting coil assemblies mounted on a plurality of different positions of an electrical equipment, each of the transmitting coil assemblies having a transmitting coil and a first magnetic core; a plurality of control switches provided at the plurality of different positions and are constructed to control on/off of the transmitting coils of the plurality of transmitting coil assemblies, respectively; and a single receiving coil assembly mounted on a carrier of the electrical equipment and has a single receiving coil and a single second magnetic core. The transmitting coil mounted at one position of the plurality of different positions is disconnected by switching off the control switch provided at the one position before the carrier is mounted at one position; and the transmitting coil mounted at one position of the plurality of different positions is connected by switching on the control switch provided at the one position after the carrier is mounted at the one position, such that the single receiving coil is electromagnetically coupled with the transmitting coil at the one position.

According to another general concept of the present disclosure, there is provided an electrical equipment, a carrier mounted at a plurality of different positions on an electrical equipment; a load mounted on the carrier; and a wireless power supply device constructed to supply power to the load. The wireless power supply device comprises a plurality of transmitting coil assemblies mounted on the plurality of different positions of the electrical equipment, each of the transmitting coil assemblies having a transmitting coil and a first magnetic core; a plurality of control switches provided at the plurality of different positions and are constructed to control on/off of the transmitting coils of the plurality of transmitting coil assemblies, respectively; and a single receiving coil assembly mounted on the carrier and having a single receiving coil and a single second magnetic core. Before the transmitting coil mounted at one position of the plurality of different positions is disconnected by switching off the control switch provided at the one position before the carrier is mounted at the one position; and the transmitting coil mounted at one position of the plurality of different positions is connected by switching on the control switch provided at the one position after the carrier is mounted at the one position, such that the single receiving coil is electromagnetically coupled with the transmitting coil at the one position.

According to another general concept of the present disclosure, there is provided wireless power supply device adapted to supply power to a load of an electrical equipment, comprising: a single transmitting coil assembly mounted on the electrical equipment and extending to pass through a plurality of different positions on the electrical equipment; and a single receiving coil assembly mounted on a carrier of the electrical equipment and having a single receiving coil and a single magnetic core. After the carrier is installed at any one position of the different positions, the single receiving coil and the single transmitting coil are electromagnetically coupled..

According to another general concept of the present disclosure, there is provided an electrical equipment, comprising: a carrier mounted at a plurality of different positions on the electrical equipment; a load mounted on the carrier; and a wireless power supply device constructed to supply power to the load. The wireless power supply device comprises: a single transmitting coil assembly mounted on the electrical equipment and extending to pass through different positions on the electrical equipment; and a single receiving coil assembly mounted on the carrier and having a single receiving coil and a single magnetic core. After the carrier is mounted at one position of the different positions, the single receiving coil and the single transmitting coil are electromagnetically coupled.

Fig. 1 shows a schematic view of a typical refrigerator. For convenience of illustration, embodiments of the present invention will be described by taking the refrigerator shown in Fig. 1 as an example. However, the electric appliance of the present invention is not limited to the illustrated embodiment, but may be other electrical equipment such as a washing machine, an air conditioner, or the like.

As shown in Fig. 1, in the illustrated embodiment, a shelf (or a carrier) 11 is provided in the refrigerator, which may be placed at different positions A1, A2 and A3 in the refrigerator. A load (not shown) is mounted on the shelf 11, which may comprise a lighting lamp, a display lamp, or the like. When the shelf 11 is placed at one of the different positions A1, A2 and A3, a wireless power supply device may supply power to the load on the shelf 11.

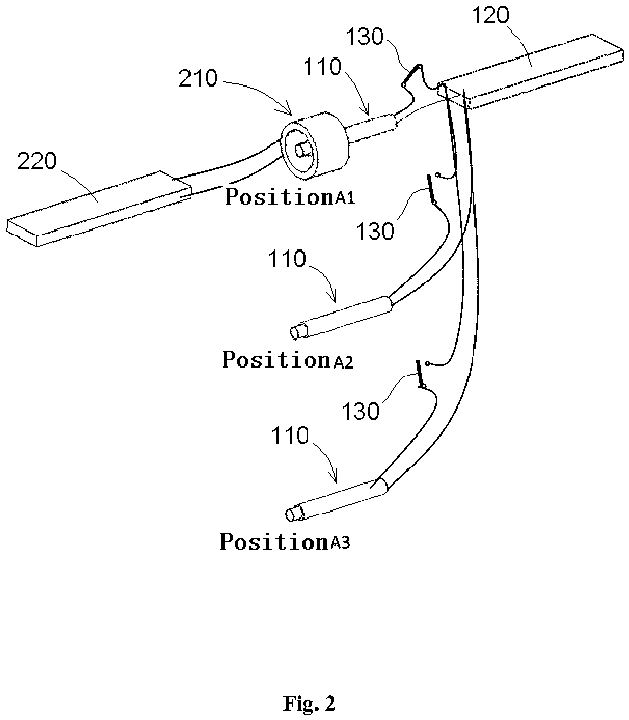

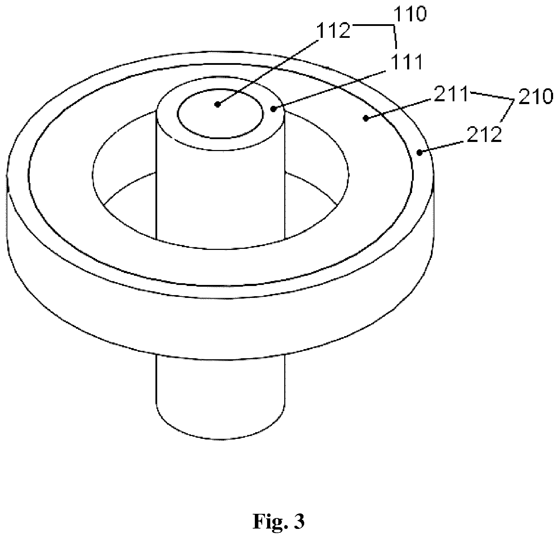

The wireless power supply device according to an embodiment of the present invention will be described below with reference to Figs. 1-3, in which Fig. 2 shows a schematic view of a wireless power supply device according to an embodiment of the present invention; and Fig. 3 shows a perspective view of a transmitting coil assembly(or transmitting module) 110 and a receiving coil assembly (receiving module) 120 of the wireless power supply device in Fig. 2 according to an embodiment of the present invention.

In an exemplary embodiment of the present invention, as shown in Figs. 2 and 3, the wireless power supply device mainly comprises a plurality of transmitting coil assemblies 110, a plurality of control switches 130 and a single receiving coil assembly 210. As shown in Figs. 2 and 3, the plurality of transmitting coil assemblies 110 are respectively mounted at different positions A1, A2 and A3 on the electrical equipment; each of the transmitting coil assemblies 110 has a transmitting coil 111 and a first magnetic core 112. The plurality of control switches 130 are respectively provided at different positions A1, A2 and A3, and constructed to control on/off of the transmitting coils 111 of the plurality of transmitting coil assemblies 110. The single receiving coil assembly 210 is mounted on the shelf 11 and has a single receiving coil 211 and a single second magnetic core 212.

In an embodiment of the present invention, as shown in Fig. 2, the transmitting coil 111 mounted at one position of the plurality of different positions A1, A2 and A3 is disconnected by switching off the control switch 130 provided at the one position before the shelf 11 is mounted at one position. The transmitting coil 111 mounted at one position of the plurality of different positions A1, A2 and A3 (for example, the position A1 shown in Fig. 2) is connected by switching on the control switch 130 provided at the one position after the shelf 11 is mounted at the one position, such that the single receiving coil 211 is electromagnetically coupled with the transmitting coil 111 at the one position.

In the embodiment shown in Figs. 2 and 3, the wireless power supply device further comprises a first circuit board 120 installed on the electrical equipment, and the transmitting coils 111 of the plurality of the transmitting coil assemblies 110 are connected in parallel to the first circuit board 120. The transmitting coils 111 may be electrically connected to the power source of the refrigerator via the first circuit board 120.

In the embodiment shown in Figs. 2 and 3, the wireless power supply device further comprises a second circuit board 220 installed on the electrical equipment, and the single receiving coil 211 is electrically connected to the second circuit board 220. The load may be electrically connected to the single receiving coil 211 via the second circuit board 220.

In an exemplary embodiment of the present invention, as shown in Figs. 2 and 3, the control switch 130 comprises a normal open press mechanical switch. The control switch 130 is connected in series between one corresponding transmitting coil 111 and the first circuit board 120. After the shelf 11 is installed at one position of the different positions A1, A2 and A3, the shelf 11 presses the control switch 130 provided at the one position, such that the control switch 130 is shifted to a closed state. In this regard, the transmitting coil 111 installed at the one position may be turned on, such that the single receiving coil 211 may be electromagnetically coupled with the transmitting coil 111 installed at the one position.

In another embodiment of the present invention, the control switch 130 may comprise a normal open magnetic actuated switch, and the control switch 130 is connected in series between one corresponding transmitting coil 111 and the first circuit board 120. After the shelf 11 is installed at one position of the different positions A1, A2 and A3, a magnet installed on the shelf 11 applies magnetic force to the control switch 130 provided at the one position, such that the control switch 130 is shifted to a closed state. In this regard, the transmitting coil 111 installed at the one position may be turned on, such that the single receiving coil 211 may be electromagnetically coupled with the transmitting coil 111 installed at the one position.

In should be noted that the control switch of the present invention is not limited to the above mentioned embodiments, and it may comprise any of the appropriate switch in the prior art, for example, a voice switch, a light switch and an electronic switch.

In an embodiment shown in Figs. 2 and 3, the transmitting coil 111 is a cylindrical coil, and the first magnetic core 112 has a cylindrical shape and is provided inside the transmitting coil 111. The receiving coil 211 is a cylindrical coil, and the second magnetic core 212 has a hollow cylindrical shape and is provided outside the transmitting coil 111.

As shown in Figs. 2 and 3, in an embodiment of the present invention, after the shelf 11 is installed at one position of the different positions A1, A2 and A3, the transmitting coil assembly 110 is positioned in the internal space of the receiving coil 211. In this regard, the single receiving coil 211 and the transmitting coil 111 installed at the one position may be adjacent to each other and electromagnetically coupled to each other.

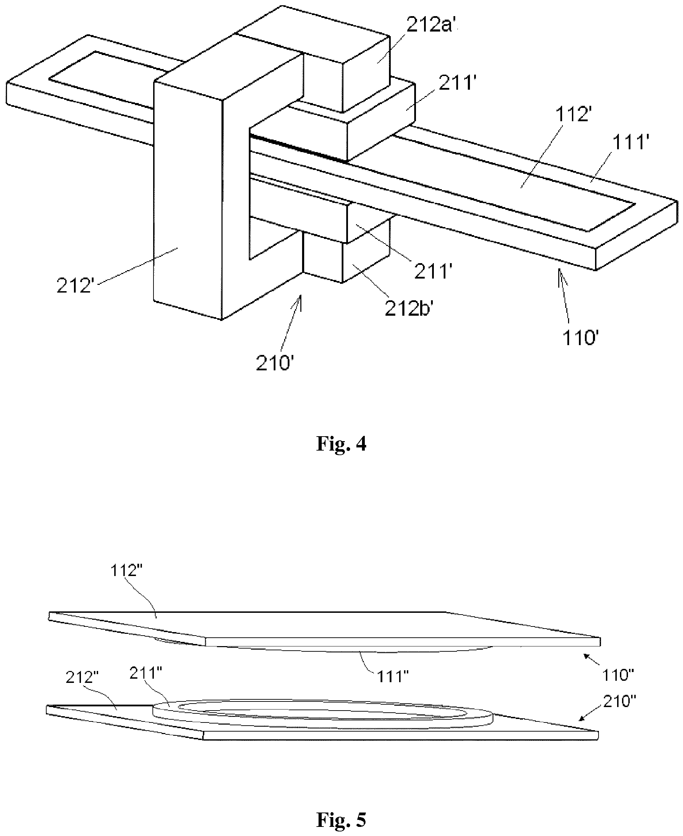

Fig.4 shows a perspective view of a transmitting coil assembly 110' and a receiving coil assembly 210' of the wireless power supply device in Fig. 2 according to another embodiment of the present invention.

As shown in Fig. 4, in the illustrated embodiment, the transmitting coil assembly 110' comprises a first magnetic core 112' and a transmitting coil 111' . The receiving coil assembly 210' comprises a second magnetic core 212' and a receiving coil 211' .

As shown in Fig. 4, in the illustrated embodiment, the first magnetic core 112' has a rectangular parallelepiped shape, and the transmitting coil 111' is wound around the outer circumference of the first magnetic core 112'. The second magnetic core 212' has a U-shape frame shape and comprises two opposite ends 212a', 212b', the receiving coil 211' being wound on the two ends 212a', 212b' of the second magnetic core 212' respectively.

As shown in Fig. 4, in the illustrated embodiment, after the shelf 11 is installed at one position of the different positions A1, A2 and A3, the transmitting coil assembly 110'is located between two ends 212a', 212b' of the second magnetic core 212'. In this regard, the single receiving coil 211' and the transmitting coil 111' installed at the one position may be adjacent to each other and electromagnetically coupled to each other.

Fig.5 shows a perspective view of a transmitting coil assembly 110" and a receiving coil assembly 210" of the wireless power supply device in Fig. 2 according to a further another embodiment of the present invention.

As shown in Fig. 5, in the illustrated embodiment, the transmitting coil assembly 110" comprises a first magnetic core 112" and a transmitting coil 111" . The receiving coil assembly 210" comprises a second magnetic core 212" and a single receiving coil 211" .

As shown in Fig. 5, in the illustrated embodiment, the first magnetic core 112" has a flat plate shape and the transmitting coil 111" has a ring shape, the transmitting coil 111" being provided on a surface of the first magnetic core 112" ; and the second magnetic core 212" has a flat plate shape and the receiving coil 211" has a ring shape, the receiving coil 211" being provided on a surface of the second magnetic core 212" which faces the transmitting coil 111".

As shown in Fig. 5, in the illustrated embodiment, after the shelf 11 is installed at one position of the different positions A1, A2 and A3, the transmitting coil assembly 110" and the receiving coil assembly 210" are in a state of being parallel to each other and facing each other. In this regard, the single receiving coil 211" and the transmitting coil 111" installed at the one position may be adjacent to each other and electromagnetically coupled to each other.

Fig. 1 shows a schematic view of a typical refrigerator. For convenience of illustration, embodiments of the present invention will be described by taking the refrigerator shown in Fig. 1 as an example. However, the electric appliance of the present invention is not limited to the illustrated embodiment, but may be other electrical equipment such as a washing machine, an air conditioner, or the like.

As shown in Fig. 1, in the illustrated embodiment, a shelf (or a carrier) 11 is provided in the refrigerator, which may be placed at different positions A1, A2 and A3 in the refrigerator. A load (not shown) is installed on the shelf 11, which may comprise a lighting lamp, a display lamp or the like. When the shelf 11 is placed at one of the different positions A1, A2 and A3, a wireless power supply device may supply power to the load on the shelf 11.

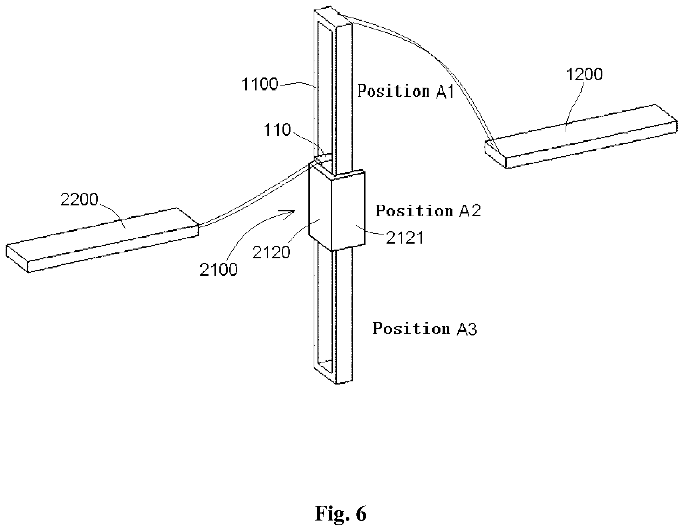

The wireless power supply device according to another embodiment of the present invention will be described below with reference to Figs. 1 and 6, in which Fig. 6 shows a schematic view of a wireless power supply device according to another embodiment of the present invention.

In an exemplary embodiment of the present invention, as shown in Fig. 6, a wireless power supply device comprises a single transmitting coil assembly 1100 and a single receiving coil assembly 2100.

As shown in Fig. 6, in the illustrated embodiment, the single transmitting coil assembly 1100 is mounted on the electrical equipment and extends to pass through a plurality of different positions A1, A2 and A3. In the illustrated embodiment, the single transmitting coil 1100 has a relative long length, such that it may cover the different positions A1, A2 and A3.

As shown in Fig. 6, in the illustrated embodiment, the single receiving coil assembly 2100 is mounted on a shelf 11 and comprises a single receiving coil 2110 and a single magnetic core 2120.

As shown in Fig. 6, in an embodiment of the present invention, after the shelf 11 is mounted at one position of the different positions A1, A2 and A3, the single receiving coil 2110 and the single transmitting coil 1100 are electromagnetically coupled.

In the embodiment shown in Fig. 6, the wireless power supply device further comprises a first circuit board 1200 mounted on the electrical equipment and the single transmitting coils 1100 is electrically connected to the first circuit board 1200. The single transmitting coil 1100 may be electrically connected to the power source of the refrigerator via the first circuit board 1200.

In the embodiment shown in Fig. 6, the wireless power supply device further comprises a second circuit board 2200 mounted on the electrical equipment and the single receiving coil 2110 is electrically connected to the second circuit board 2200. The load may be electrically connected to the single receiving coil 2110 via the second circuit board 2200.

In the embodiment shown in Fig.6, the single transmitting coil 1100 has a rectangular parallelepiped frame shape. The magnetic core 2120 of the single receiving coil assembly 2100 has a U-shape frame shape and comprises two opposite ends 2121, 2121, the single receiving coil 2110 being wound on one end 2121 of the magnetic core 2120.

As shown in Fig. 6, in the illustrated embodiment, after the shelf 11 is installed at any one of the different positions A1, A2 and A3, one end 2121 of the magnetic core 2120 and the single receiving coil 2110 wound on the one end are positioned in an internal space of the single transmitting coil 1100, and the other end 2121 of the magnetic core 2120 is positioned outside of the single transmitting coil 1100. In this regard, the single receiving coil 2110 and the transmitting coil 1100 mounted at the one position may be adjacent to each other and electromagnetically coupled to each other.

In an exemplary embodiment of the present invention, as shown in Fig. 6, the transmitting coil 1100 has a length of about 100mm, a width of about 12mm and a thickness of about 5mm; and the receiving coil 2110 has a length of about 22mm, a width of about 4mm and a thickness of about 7mm. The magnetic core 2120 has a length of about 20mm and a thickness of about 2mm.

In the embodiment shown in Fig. 6, the self-inductance of the transmitting coil 100 and the receiving coil 2110 and the mutual inductance therebetween are almost constant at the plurality of different positions A1, A2, A3, thus ensuring a stable transporting power.

However, the present invention is not limited by the illustrated embodiment, the transmitting coil 1100 is not limited to the rectangular parallelepiped shape, and it may comprise a coil with any other appropriate shape, as long as the strength of the internal magnetic field of the coil is evenly distributed when being energized.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although exemplary embodiments of the present disclosure is described in detail with reference to the attached drawings, the present disclosure may be embodied in many different forms and should not be construed as being limited to the embodiment set forth herein; rather, these embodiments are provided so that the present disclosure will be thorough and complete.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A household appliance, comprising:
a carrier (11) mountable at a plurality of different mounting positions (A1, A2, A3) provided in the household electrical appliance;
a load mounted on the carrier (11); and
a wireless power supply device adapted to supply power to the load mounted on the carrier (11), the wireless power supply device comprising:
a plurality of transmitting coil assemblies (110), each transmitting coil assembly (110) being mounted at a respective position of the plurality of different positions (A1, A2, A3) provided in the household appliance (10), each of the transmitting coil assemblies (110) having a transmitting coil (111) and a first magnetic core (112);
a plurality of control switches (130), each control switch (130) being provided at a respective position of the plurality of different positions (A1, A2, A3) in the household appliance (10), wherein each of the plurality of control switches (130) is electrically coupled to a respective one of the plurality of transmitting coil assemblies (110) and is constructed to control on/off of the transmitting coil (111) of the respective transmitting coil assembly (110); and
a single receiving coil assembly (210) mounted on the carrier (11) of the household appliance (10), the single receiving coil assembly (210) having a single receiving coil and a single second magnetic core,
wherein each control switch (130) which is electrically coupled to the transmitting coil (111) mounted at a respective position of the plurality of different positions (A1, A2, A3) is adapted to be switched off before the carrier (11) is mounted at said position, thereby disconnecting said transmitting coil (111), and to switch to a closed state after the carrier (11) is mounted at said position, thereby connecting said transmitting coil (111) and such that the single receiving coil is electromagnetically coupled with the transmitting coil (111) mounted at said position.

2. The household appliance (10) according to claim 1, further comprising at least one of:
a first circuit board (120) adapted to be mounted on the household appliance (10), the transmitting coils of the plurality of the transmitting coil assemblies (110) being connected in parallel to the first circuit board (120); and
a second circuit board (220) adapted to be mounted on the household electrical appliance, the single receiving coil being electrically connected to the second circuit board (220).

3. The household appliance (10) according to claim 2, comprising said first circuit board (120), wherein
the control switch (130) comprises a normal open press mechanical switch, and is connected in series between one corresponding transmitting coil and the first circuit board (120);
after the carrier is mounted at one position of the plurality of different positions, the carrier presses the control switch (130) provided at the one position, such that the control switch (130) is switched to a closed state.

4. The household appliance (10) according to claim 2, wherein
the control switch (130) comprises a normal open magnetic actuated switch, and is connected in series between one corresponding transmitting coil and the first circuit board;
after the carrier is installed at one position of the plurality of different positions, a magnet mounted on the carrier applies magnetic force to the control switch, such that the control switch is switched to a closed state.

5. The household appliance (10) according to claim 1, wherein
the transmitting coil comprises a cylindrical coil, and the first magnetic core has a cylindrical shape and is provided inside the transmitting coil; and
the receiving coil comprises a cylindrical coil, and the second magnetic core has a hollow cylindrical shape and is provided outside the transmitting coil.

6. The household appliance (10) according to claim 5, wherein
after the carrier (11) is mounted at one position of the plurality of different positions (A1, A2, A3), the transmitting coil assembly is positioned in the internal space of the receiving coil.

7. The household appliance (10) according to claim 1, wherein
the first magnetic core has a rectangular parallelepiped shape, and the transmitting coil is wound around the outer circumference of the first magnetic core; and
the second magnetic core has a U-shape frame shape and comprises two opposite ends, the receiving coil being wound on the two ends of the second magnetic core respectively.

8. The household appliance (10) according to claim 7, wherein
after the carrier (11) is mounted at one position of the plurality of different positions (A1, A2, A3), the transmitting coil assembly is located between the two ends of the second magnetic core.

9. The household appliance (10) according to claim 1, wherein
the first magnetic core has a flat plate shape and the transmitting coil has a ring shape, the transmitting coil being provided on a surface of the first magnetic core; and
the second magnetic core has a flat plate shape and the receiving coil has a ring shape, the receiving coil being provided on a surface of the second magnetic core which faces the transmitting coil.

10. The household appliance (10) according to claim 9, wherein
after the carrier (11) is mounted at one position of the plurality of different positions (A1, A2, A3), the transmitting coil assembly and the receiving coil assembly are in a state of being parallel to each other and facing each other.

11. The household appliance (10) according to any one of claims 1 to 10, wherein the household appliance (10) is an electrical appliance including any of a refrigerator, a washing machine and an air conditioner.

## Patentansprüche

1. Haushaltsgerät, das umfasst:
einen Träger (11), der an einer Vielzahl verschiedener, an dem elektrischen Haushaltsgerät vorhandener Montagepositionen (A1, A2, A3) montiert werden kann;
eine Last, die an dem Träger (11) montiert ist; und
eine drahtlose Stromversorgungsvorrichtung, die zum Zuführen von Strom zu der an dem Träger (11) montierten Last eingerichtet ist, wobei die drahtlose Stromversorgungsvorrichtung umfasst:
eine Vielzahl von Sende-Spulenanordnungen (110), wobei jede Sende-Spulenanordnung (110) an einer jeweiligen Position der Vielzahl an dem Haushaltsgerät (10) vorhandener verschiedener Positionen (A1, A2, A3), montiert ist, und jede der Sende-Spulenanordnungen (110) eine Sende-Spule (111) sowie einen ersten Magnetkern (112) aufweist;
eine Vielzahl von Steuerungsschaltern (130), wobei jeder Steuerungsschalter (130) an einer jeweiligen Position der Vielzahl verschiedener Positionen (A1, A2, A3) an dem Haushaltsgerät (10) vorhanden ist und jeder der Vielzahl von Steuerungsschaltern (130) elektrisch mit einer jeweiligen der Vielzahl von Sende-Spulenanordnungen (110) gekoppelt und so konstruiert ist, dass er An-/Ausschalten der Sendespule (111) der jeweiligen Sende-Spulenanordnung (110) steuert; und
eine einzelne Empfangs-Spulenanordnung (210), die an dem Träger (11) des Haushaltsgerätes (10) montiert ist, wobei die einzelne Empfangs-Spulenanordnung (210) eine einzelne Empfangsspule und einen einzelnen zweiten Magnetkern aufweist,
wobei jeder Steuerungsschalter (130), der elektrisch mit der an einer jeweiligen Position der Vielzahl verschiedener Positionen (A1, A2, A3) montierten Sendespule (111) gekoppelt ist, so eingerichtet ist, dass er geöffnet wird, bevor der Träger (11) an der Position montiert wird, um damit die Sendespule (111) zu trennen, und in einen geschlossenen Zustand geschaltet wird, nachdem der Träger (11) an der Position montiert ist, und damit die Sendespule (111) verbunden wird, und so die einzelne Empfangsspule elektromagnetisch mit der an der Position montierten Sendespule (111) gekoppelt wird.

2. Haushaltsgerät (10) nach Anspruch 1, das des Weiteren umfasst:
eine erste Leiterplatte (120), die zum Montieren an dem Haushaltsgerät (10) eingerichtet ist, wobei die Sendespulen der Vielzahl der Sende-Spulenanordnungen (110) parallel zu der ersten Leiterplatte (120) geschaltet sind; oder/und
eine zweite Leiterplatte (220), die zum Montieren an dem elektrischen Haushaltsgerät eingerichtet ist, wobei die einzelne Empfangsspule elektrisch mit der zweiten Leiterplatte (220) verbunden ist.

3. Haushaltsgerät (10) nach Anspruch 2, das die erste Leiterplatte (120) umfasst, wobei
der Steuerungsschalter (130) einen im Ruhezustand offenen mechanischen Druckschalter umfasst und in Reihe zwischen eine entsprechende Sendespule und die erste Leiterplatte (120) geschaltet ist;
nachdem der Träger an einer Position der Vielzahl verschiedener Positionen montiert ist, der Träger den an der einen Position vorhandenen Steuerungsschalter (130) drückt, so dass der Steuerungsschalter (130) in einen geschlossenen Zustand geschaltet wird.

4. Haushaltsgerät (10) nach Anspruch 2, wobei
der Steuerungsschalter (130) einen im Ruhezustand offenen magnetisch betätigten Schalter umfasst und in Reihe zwischen eine entsprechende Sendespule und die erste Leiterplatte geschaltet ist;
nachdem der Träger an einer Position der Vielzahl verschiedener Positionen installiert ist, ein an dem Träger montierter Magnet Magnetkraft auf den Steuerungsschalter ausübt, so dass der Steuerungsschalter in einen geschlossenen Zustand geschaltet wird.

5. Haushaltsgerät (10) nach Anspruch 1, wobei
die Sendespule eine zylindrische Spule umfasst, und der erste Magnetkern eine zylindrische Form hat und sich im Inneren der Sendespule befindet; und
die Empfangsspule eine zylindrische Spule umfasst, und der zweite Magnetkern eine hohlzylindrische Form hat und sich außerhalb der Sendespule befindet.

6. Haushaltsgerät (10) nach Anspruch 5, wobei,
nachdem der Träger (11) an einer Position der Vielzahl verschiedener Positionen (A1, A2, A3) montiert ist, die Sende-Spulenanordnung in dem Innenraum der Empfangsspule positioniert wird.

7. Haushaltsgerät (10) nach Anspruch 1, wobei
der erste Magnetkern die Form eines Quaders hat und die Sendespule um den Außenumfang des ersten Magnetkerns herum gewickelt ist; und
der zweite Magnetkern als ein U-förmiger Rahmen ausgebildet ist und zwei gegenüberliegende Enden aufweist, wobei die Empfangsspule jeweils auf die zwei Enden des zweiten Magnetkerns gewickelt ist.

8. Haushaltsgerät (10) nach Anspruch 7, wobei,
nachdem der Träger (11) an einer Position der Vielzahl verschiedener Positionen (A1, A2, A3) montiert ist, sich die Sende-Spulenanordnung zwischen den zwei Enden des zweiten Magnetkerns befindet.

9. Haushaltsgerät (10) nach Anspruch 1, wobei
der erste Magnetkern in Form einer flachen Platte ausgebildet ist und die Sendespule eine Ringform hat, wobei die Sendespule an einer Fläche des ersten Magnetkerns vorhanden ist; und
der zweite Magnetkern in Form einer flachen Platte ausgebildet ist und die Empfangsspule eine Ringform hat, wobei die Empfangsspule an einer Fläche des zweiten Magnetkerns vorhanden ist, die der Sendespule zugewandt ist.

10. Haushaltsgerät (10) nach Anspruch 9, wobei,
nachdem der Träger (11) an einer Position der Vielzahl verschiedener Positionen (A1, A2, A3) montiert ist, die Sende-Spulenanordnung und die Empfangs-Spulenanordnung sich in einem Zustand befinden, in dem sie parallel zueinander und einander zugewandt sind.

11. Haushaltsgerät (10) nach einem der Ansprüche 1 bis 10, wobei das Haushaltsgerät (10) ein elektrisches Gerät ist, das einen Kühlschrank, eine Waschmaschine und eine Klimaanlage einschließt.

## Revendications

1. Appareil ménager, comprenant:
un support (11) pouvant être monté sur une pluralité de positions de montage différentes (A1, A2, A3) prévues dans l'appareil électroménager;
une charge montée sur le support (11); et
un dispositif d'alimentation sans fil conçu pour fournir de l'énergie à la charge montée sur le support (11), le dispositif d'alimentation sans fil comprenant:
une pluralité d'ensembles de bobines de transmission (110), chaque ensemble de bobines de transmission (110) étant monté à une position respective de la pluralité de positions différentes (A1, A2, A3) prévues dans l'appareil ménager (10), chacun des ensembles de bobines de transmission (110) comportant une bobine de transmission (111) et un premier noyau magnétique (112);
une pluralité de commutateurs de commande (130), chaque commutateur de commande (130) étant prévu à une position respective de la pluralité de positions différentes (A1, A2, A3) dans l'appareil ménager (10), dans lequel chacun de la pluralité de commutateurs de commande (130) est couplé électriquement à un ensemble respectif de la pluralité d'ensembles de bobines de transmission (110) et est construit pour commander la mise en marche/arrêt de la bobine de transmission (111) de l'ensemble de bobines de transmission respectif (110); et
un ensemble de bobine de réception unique (210) monté sur le support (11) de l'appareil ménager (10), l'ensemble de bobine de réception unique (210) ayant une bobine de réception unique et un second noyau magnétique unique,
dans lequel chaque commutateur de commande (130) qui est couplé électriquement à la bobine d'émission (111) montée à une position respective de la pluralité de positions différentes (A1, A2, A3) est conçu pour être mis hors tension avant que le support (11) soit monté à ladite position, déconnectant ainsi ladite bobine d'émission (111), et pour passer à un état fermé après que le support (11) ait été monté à ladite position, connectant ainsi ladite bobine d'émission (111) et de telle sorte que la bobine de réception unique soit couplée de manière électromagnétique à la bobine d'émission (111) montée à ladite position.

2. Appareil ménager (10) selon la revendication 1, comprenant en outre au moins un des éléments suivants:
une première carte de circuit imprimé (120) conçue pour être montée sur l'appareil ménager (10), les bobines d'émission de la pluralité des ensembles de bobines d'émission (110) étant connectées en parallèle à la première carte de circuit imprimé (120); et
une seconde carte de circuit (220) conçue pour être montée sur l'appareil électroménager, la bobine réceptrice unique étant connectée électriquement à la seconde carte de circuit (220).

3. Appareil ménager (10) selon la revendication 2, comprenant ladite première carte de circuit (120), dans lequel
le commutateur de commande (130) comprend un commutateur mécanique à pression normalement ouvert, et est connecté en série entre une bobine de transmission correspondante et la première carte de circuit imprimé (120);
une fois le support adoptant l'une des positions parmi la pluralité de positions différentes, le support appuie sur l'interrupteur de commande (130) prévu à ladite position pour inhiber l'interrupteur de commande (130).

4. Appareil ménager (10) selon la revendication 2, dans lequel le commutateur de commande (130) comprend un commutateur à actionnement magnétique normalement ouvert, et est connecté en série entre une bobine de transmission correspondante et la première carte de circuit imprimé;
une fois le support adoptant l'une des positions parmi la pluralité de positions différentes, un aimant monté sur le support applique une force magnétique à l'interrupteur de commande pour inhiber l'interrupteur de commande.

5. Appareil ménager (10) selon la revendication 1, dans lequel
la bobine de transmission comprend une bobine cylindrique, et le premier noyau magnétique est de forme cylindrique et prévu à l'intérieur de la bobine de transmission; et
la bobine de réception comprend une bobine cylindrique, et le second noyau magnétique est de forme cylindrique creuse et prévu à l'extérieur de la bobine d'émission.

6. Appareil ménager (10) selon la revendication 5, dans lequel
une fois le support (11) adoptant l'une des positions parmi la pluralité de positions différentes (A1, A2, A3), l'ensemble de bobine d'émission est positionné dans l'espace interne de la bobine de réception.

7. Appareil ménager (10) selon la revendication 1, dans lequel
le premier noyau magnétique a une forme de parallélépipède rectangle, et la bobine de transmission est enroulée autour de la circonférence extérieure du premier noyau magnétique; et
le second noyau magnétique a une forme de cadre en U et comprend deux extrémités opposées, la bobine réceptrice étant enroulée respectivement sur les deux extrémités du second noyau magnétique.

8. Appareil ménager (10) selon la revendication 7, dans lequel
une fois le support (11) adoptant l'une des positions parmi la pluralité de positions différentes (A1, A2, A3), l'ensemble de bobines d'émission est situé entre les deux extrémités du second noyau magnétique.

9. Appareil ménager (10) selon la revendication 1, dans lequel
le premier noyau magnétique est en forme de plaque plate et la bobine de transmission est en forme d'anneau, la bobine de transmission étant prévue sur une surface du premier noyau magnétique; et
le second noyau magnétique est en forme de plaque plate et la bobine réceptrice est en forme d'anneau, la bobine réceptrice étant prévue sur une surface du second noyau magnétique qui fait face à la bobine émettrice.

10. Appareil ménager (10) selon la revendication 9, dans lequel
une fois le support (11) adoptant l'une des positions parmi la pluralité de positions différentes (A1, A2, A3), l'ensemble de bobines d'émission et l'ensemble de bobines de réception sont dans un état où ils sont parallèles l'un à l'autre et se font face.

11. Appareil ménager (10) selon l'une quelconque des revendications 1 à 10, dans lequel l'appareil ménager (10) est un appareil électrique comprenant l'un quelconque d'un réfrigérateur, d'une machine à laver et d'un climatiseur.
